# EUROPEAN PATENT APPLICATION

(11) **EP 2 874 330 A1**
(43) Date of publication of application: **20.05.2015**
(21) Application number: 13306550.8
(22) Date of filing: 13.11.2013
(51) Int. Cl.: H04B 10/116

(54) **System and method for providing a user interface to a device**

(71) Applicant: Gemalto SA, 92190 Meudon (FR)
(72) Inventor: Touvet, Stéphane, 92190 Meudon (FR); Antoine, Matthieu, 92190 Meudon (FR)
(74) Representative: Lotaut, Yacine Diaw

(57) **Abstract**

The present invention relates to a system and method for providing a user interface to a device which communicates by means of luminous signals. The user interface is a keyboard pattern which may be printed, displayed on a screen or optically projected on a working surface. The keyboard comprises an input area with a plurality of virtual keys. Each virtual key is a visual display of a key into a unique combination of colours. When pressing and/or approaching on a virtual key by the device, a photosensitive sensor of the device captures the luminous signal from said virtual keys Decoding means of the device converts said luminous signal into a key associated. The decoding means uses a demodulation made on at least one colour parameter such as hue and/or saturation. In addition, the method includes an identification of the selected key. The method also includes outputting the identification of the selected key to the device and performing the instructions associated to the selected key.

## Description

### FIELD OF THE INVENTION

The present invention relates to a system and method for providing a user interface to a device which communicates by means of luminous signals.

### BACKGROUND

Currently, many ways permit to establish communications between two devices using different interfaces available on the market.

The need to interconnect electronic devices in order to transfer data is increasing. Many solutions are based on the use of communication protocols or standards. But the main existing solutions use proprietary protocols and specific connectors.

One inconvenience results from the various means to interface devices together, in particular tablets and mobile phones. These means are heterogeneous and are using more and more proprietary connectors or protocols.

Some applications, such as secure online payments, suffer from this lack of heterogeneity especially to simplify the data transmission when payment must be validated. The most representative is OCRA, whose acronym means "OATH Challenge Response Algorithms", like when the challenge has to be copied by the user on the device that generates the challenge.

A way to deal with this issue is to use a common interface to all these devices and having homogeneous capabilities widely shared among them.

Some solutions use optic transmissions involving the generation of luminous signals from a light source. It allows encoding a binary data flow as for instance the Morse code. The duration and the frequencies of luminous signals may be used for encoding data.

Black and white encoding is well-known by the man skilled in the art: an emission of a light pulse corresponds to a white color transmission, and no emission corresponds to a black color transmission. However, black and white encoding does not allow sending a lot of bits per time period used for displaying a full image.

For increasing the bit rate, a modulation on grey level, eventually on the grey level of each basic color (Red, Green, Blue) could be made. The RGB model uses three primary colors: Red, Green and Blue. Other color base could be used like, as an example, the CMY (Cyan, Magenta, Yellow) model corresponding to a subtractive color model. Each color of the RGB or CMY model may be encoded with a triplet of parameters comprised in the range of [0; 255]. It corresponds to a codification of each color.

A problem with such a grey level modulation is that the ambient light and the display configuration may interfere with the generated light pulses. In that case, the light received at the receiver level may comprise different levels of grey which must be interpreted or additionally modulated as a function of the environmental context. As an example, power management of a smart phone may modulate the brightness of the screen during a transmission causing false detection.

To overcome these aforementioned disadvantages, especially the lack of standardized communication and the interferences from ambient light or from the screen brightness in the data transmission, the applicant proposes a method for transmitting digital data from an emitting device to a receiving device, comprising an emission step and a reception step.

The emission step, performed by the emitting device, comprises encoding digital data by modulation of a luminous signal, said modulation being made on at least one colour parameter independent of brightness, and generating said luminous signal. The reception step, performed by the receiving device, comprises capturing the luminous signal, determining at least one colour parameter from said captured luminous signal, and decoding the digital data by demodulation of said at least one colour parameter.

A colour parameter independent of brightness is for example hue or saturation. Modulation can be realized on hue only, saturation only, or both hue and saturation. The most important is to keep the modulation independent of brightness.

Thus, encoding and decoding are realized by hue and/or saturation modulation and demodulation of a luminous signal. The modulation is realized by allocating hues and/or saturation to digital data. Hue and saturation being independent of brightness, the ambient light contribution is strongly reduced, which improves data transmission reliability.

This method does not provide means for the user to interact with the emitting device or the receiving device.

As a result, there is a great need for a system to provide a user interface on such emitting device or receiving device.

### SUMMARY

The present invention addresses the aforementioned drawbacks by providing a user interface which communicates with a device through data transmission using color modulation of luminous signals.

An approach of the device by the user on a predefined area of the user interface enables the following steps: capturing the luminous signal corresponding to the action of the user, determining at least one colour parameter from said captured luminous signal, decoding the digital data by demodulation of said at least one colour parameter, determining the corresponding key associated to the digital data, and performing the action associated to this key..

Preferentially, the predefined colour parameters are colour parameters of a coding table, and the comparing step comprises matching each colour parameter of the second set of colour parameter with the closest colour parameter of the coding table.

In other various methods, the user interface is a keyboard pattern which may be printed onto a transportable device, a keyboard image displayed on a screen or optically projected on a working surface. The printed transportable keyboard pattern can be a sheet of paper or can be pre-painted on the working surface. Alternatively, the keyboard may simply be a photograph or other physical representation of a keyboard that helps guide the user to the appropriate key color.

The keyboard comprises an input area with a plurality of virtual keys. Each virtual key is a visual display of a key into a unique combination of colours of a luminous signal.

The pressing and/or approaching action on these virtual keys by the device, comprising a photosensitive sensor and decoding means, allows the user to interact with said device. The photosensitive sensor captures the luminous signal from these virtual keys. The decoding means converts said luminous signal into the digital data. The decoding means uses a demodulation made on at least one colour parameter such as hue and/or saturation. In addition, the method includes an identification of the selected virtual key based on the decoded digital data. The method also includes outputting the identification of the selected key to the device and performing the instructions associated to the selected key.

To achieve those and other advantages, and in accordance with the purpose of the invention as embodied and broadly described, the invention proposes a method for providing a user interface to a device communicating by means of a luminous signal, wherein
- capturing a luminous signal from an input area of a keyboard pattern, said input area comprising a visual key into a unique combination of colours,
- determining at least one colour parameter from said captured luminous signal (11)
- decoding the digital data by demodulation of said at least one colour parameter,
- determining the corresponding key associated to the digital data,
- performing an action associated to said determined key.

In other various methods, the colour parameter used for decoding is hue. The hues are sensibly spaced from each other of 360°/N, where N is the number of coded hues. In other various methods, the colour parameter used for decoding is saturation.

With the present invention, the determination of at least one colour parameter can comprise the following steps:
- measuring a set of colour parameters associated with the captured luminous signal,
- comparing said set of colour parameters with predefined colour parameters,
- determining the closest predefined colour parameters to the set of colour parameters.

In other various methods, the predefined colour parameters are stored on a coding table wherein each predefined colour parameter is associated to a key of the keyboard pattern. The keyboard pattern may be printed on a sheet, displayed on a screen of a terminal or optically projected on a working surface. Before displaying the keyboard pattern onto a screen of the terminal, said terminal converts each key of the keyboard pattern into a luminous signal by using modulation made on at least one colour parameter. The terminal generates the luminous signal for each key of the keyboard pattern. The terminal displays the generated keyboard pattern.

The present invention also relates to a system for providing a keyboard pattern to a device communicating via luminous signal, wherein said device being configured to captures luminous signal from the keyboard and to execute action corresponding to the key of the keyboard pattern associated to said luminous signal according the method of the present invention.

### BRIEF DESCRIPTION OF THE DRAWINGS

Some embodiments of apparatus and/or methods in accordance with embodiments of the present invention are now described, by way of example only, and with reference to the accompanying drawings, in which:
- FIG. 1 illustrates schematically a device comprising means to interact with a virtual user interface, according an embodiment of the present invention.
- FIG. 2 to FIG. 5 illustrates embodiments of coding/decoding scheme according the present invention.
- FIG. 6a and FIG. 6b illustrates embodiments of a user interface, according to the present invention.

### DETAILED DESCRIPTION

The present invention is not specific to any particular hardware or software implementation, and is at a conceptual level above specifics of implementation. It is to be understood that various other embodiments and variations of the invention may be produced without departing from the spirit or scope of the invention. The following is provided to assist in understanding the practical implementation of particular embodiments of the invention.

The same elements have been designated with the same referenced numerals in the different drawings. For clarity, only those elements and steps which are useful to the understanding of the present invention have been shown in the drawings and will be described.

Further, the mechanisms of data communication between the parties and their environment have not been detailed either, the present invention being here again compatible with usual mechanisms.

Moreover, when an action is said to be performed by a terminal, it is in fact executed by a microprocessor in this terminal controlled by instruction codes recorded in a program memory on said terminal. An action is also ascribed to an application or software. This means that part of the instruction codes making up the application or software are executed by the microprocessor.

In the following description, well-known functions or constructions by the man skilled in the art are not described in detail since they would obscure the invention in unnecessary detail.

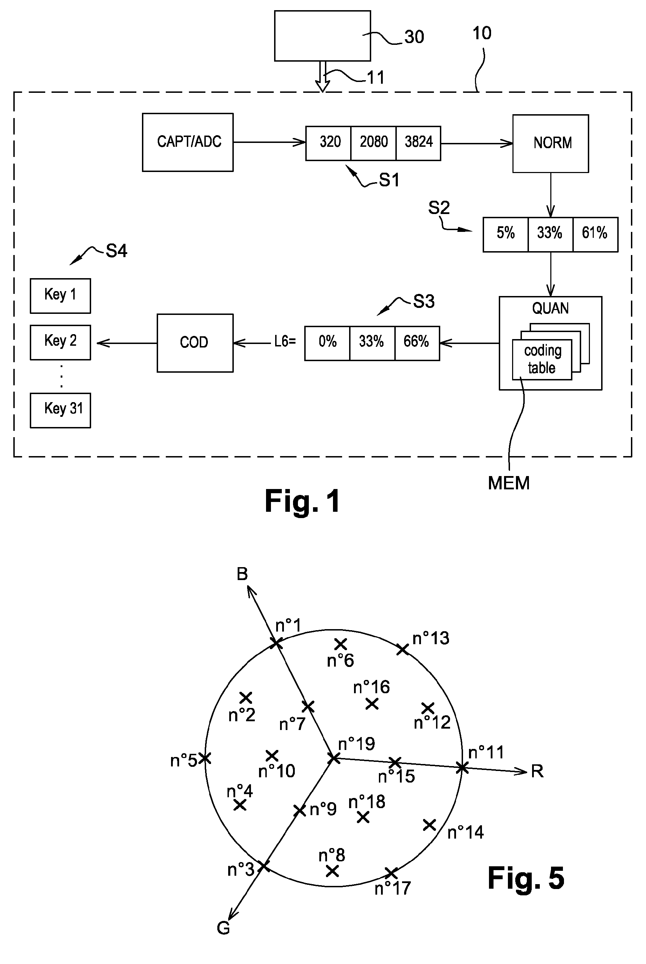

FIG. 1 shows entities involved in a flow diagram for providing a user interface 30 to a device 10 communicating with transmission of data by means of luminous signals. For simplicity of discussion, only one of each entity is shown at FIG.1. It is understood, however, that embodiments of the technology may include more than one of each entity. Additionally, some embodiments of the technology may include fewer than all of the entities shown in FIG. 1. FIG. 1 depicts an example of the system in which a device 10 is implemented.

The device 10 comprises a photosensitive sensor CAPT for receiving a luminous signal. The sensor CAPT comprises three different color sensors R, G, B corresponding to the three primary colors R, G, B. The color sensors may be any photosensitive sensors like phototransistors, photodiodes or CCD. The sensors may comprise a wide spectrum with a dedicated filter or a narrow band sensor.

The sensor CAPT is configured according to an additive color model for allowing the capture of the luminous signal 11. The sensor CAPT may be followed by any amplification chain.

The CAPT is coupled with an analog-to-digital converter, named ADC, in order to provide the absolute numerical values of the triplet corresponding to the hue and/or saturation codification of each basis color when a luminous signal 11 is captured by the device 10. The analog digital converter ADC allows the conversion of analog hue and/or saturation levels into digital hue and/or saturation levels. The codification of hues and/or saturation at the input and the output of the ADC are absolute values.

The device 10 of the invention comprises a normalization function, named NORM, allowing the calculation of each proportion of basis colors in the received luminous signal 11.

Once the sequence being normalized, the device 10 comprises a quantification function, named QUAN, which allows the determination of a hue and/or saturation corresponding to a predefined combination in a coding table below described. The device 10 comprises a memory MEM for storing the coding table allocating hues and/or saturation to digital data.

The determination of the combination is realized with a likelihood criterion between the normalized sequence from the sensor CAPT and a predefined sequence stored in the memory MEM of the device 10.

The device 10 comprises decoding means COD which allows the implementation of the normalization function and the quantification function. The decoding unit COD allows also decoding digital sequences forming hues and/or saturation into data from any protocol.

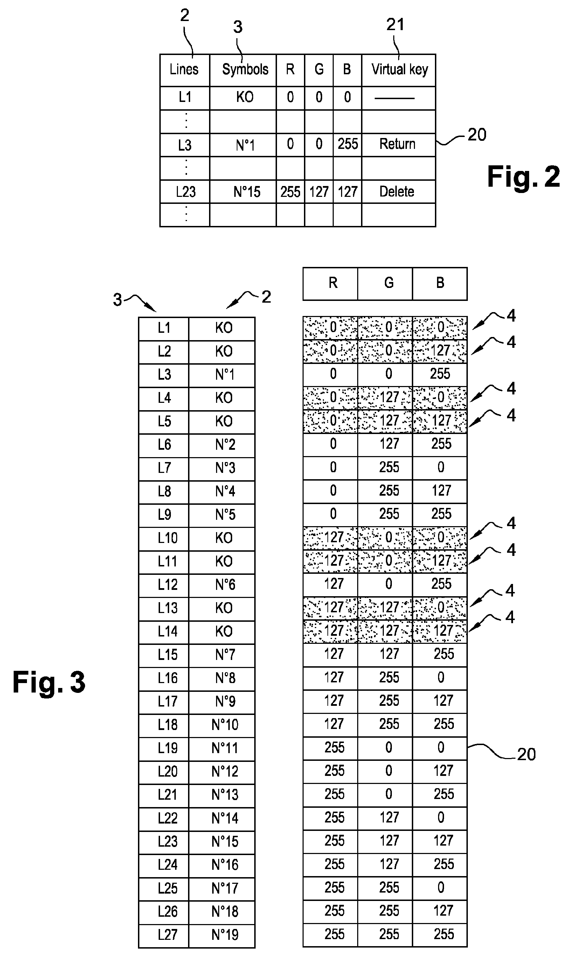

FIG. 2 to FIG 5 describe an embodiment of the coding/decoding scheme stored on the memory MEM of the device 10. The coding/decoding scheme is, for example, structured in the form of a table 20. For example, each row of the table corresponds to a transposition of the color parameters modulation into a modulation on the three parameters RGB and each column of the table 20 corresponds to an information associated to this transposition. The table 20 comprises also a column 21 corresponding to a virtual key associated.

For displaying a color image, it is commonly admitted to separate pixel colors in three color components, each component corresponding to a basic color which can be Red, Green and Blue or Cyan, Magenta and Yellow. For processing image, it is also known to have other color referential, like Hue, Saturation and Value (HSV), which correspond to a conical or a cylinder repartition of the colors.

When a HSV model is chosen to encode the data, a color is defined by three basis components: Hue, Saturation and Value. A variant in this representation is the HSL model, where components are the Hue, the Saturation and the Lightness.

Commonly, the Hue is an angular parameter; the Saturation corresponds to a radius and the Value (or the Lightness) to an elevation parameter. In such a referential, the global luminosity of a pixel corresponds to Value (or Lightness). An eventual level color from pastel to fluorescent-like color corresponds to Saturation.

The hue and the saturation are color parameters independent from any external light, independent from any setting of color from the user and also independent from global lightness of the display. Hue and saturation are color parameters independent of brightness.

The hue being chosen in a range of 0° to 360°, an angle can define a data. For having the highest inter-symbol distance using only hue modulation, we can simply define the range of a symbol as an angle of 360°/N for having N hue range corresponding to N symbols. This coding of data only on the hue enables to have a best coding than a grey level modulation on each component Red, Green and Blue.

It should be noted that is also possible to code data on a saturation only or on a combination of hue and saturation. The most important is coding data on one or several color parameters independent of brightness. Hue and saturation are named "color parameter" in the following description.

For implementing such a solution in a product, we have to take into account that most of display devices use RGB sensors, measuring grey levels of a luminous signal.

As a consequence, a translation between the RGB referential and the HSV (or HLS) referential is required. However, such a translation from RGB to HSV (or HLS) referential requires high processing. Another approach is to use a bitmap for translation, but such a bitmap should be at least of few megabytes. So a direct approach is not very practical for small object having a small capability of processing and small memory requirement.

For simplifying the realization of encoding/decoding, the preferred embodiment use a direct modulation in the RGB referential that prevent to have a conversion between RGB to HSV and the reverse. In the preferred embodiment a coding table is predefined for transposing the color parameters modulation into a modulation on the three parameters RGB.

FIG 3 illustrates an embodiment of the table 20 using the ratios between the grey levels for encoding digital data. Each color of the RGB model may be encoded with a triplet of parameters RGB comprised in the range of [0; 255]. For instance, it is known in a RGB model that:
- a pure red hue with full Saturation and Lightness is encoded with the following numerical RGB parameter: {255 ; 0; 0}, it corresponds to the line L19 in column 3 of the table of FIG.2;
- a pure green hue with full Saturation and Lightness is encoded with the following numerical RGB parameters: {0 ; 255; 0}, it corresponds to the line L7 in column 3 of the table of FIG.2;
- a pure blue hue with full Saturation and Lightness is encoded with the following numerical RGB parameters: {0 ; 0; 255}, it corresponds to the line L3 in column 3 of the table of figure 1.

In the described embodiment, three levels are defined in the range of [0; 255]. These three levels are 0, 127 and 255. A level corresponds with a grey level: the red level, the green level or the blue level. A combination of these levels defines specific color parameters, for example the hue/saturation couples corresponding to the combinations (0, 0, 0), (0, 0, 127), (0, 127, 255), etc. With three levels, there are 3³ = 27 possible combinations of hues and saturation. In other embodiments, more than three predefined levels may be defined. The numerical values of predefined levels may also be adjusted to specific use cases.

It should be noted that the embodiment of FIG. 3 discloses a modulation on hue and saturation. Indeed, some combinations have the same hue, for example lines L25 and L26, or lines L12 and L15 but with a different saturation level. However, man of the art will understand that modulation can be realized only on hue, or on saturation only but with a lower number of symbols for a same discrimination distance.

When the luminous signal 11 transmission is captured by the device 10, the reception and the decoding of the color parameters are improved by an appropriate choice of the levels in each interval [0, 255]. Indeed, the predefined levels are defined to ensure an efficient discrimination of each color parameter with respect to another. An inter-color parameter distance is defined by comparing the numerical values of color parameters of the set of combinations illustrated in FIG. 3.

In reference with FIG. 3:
- The column number 3 allows numbering all combinations of the previous example from L1 to L27.
- The column numbered 2 allows indicating that combinations referenced 4 are removed from the triplets. When a combination is removed, the column 2 indicates "KO".
- The column R indicates the grey level of the primary red color which is comprised between the three different predefined levels (0, 127, 255).
- The column G indicates the grey level of the primary green color which is comprised between the three different predefined levels (0, 127, 255).
- The column B indicates the grey level of the primary blue color which is comprised between the three different predefined levels (0, 127, 255).

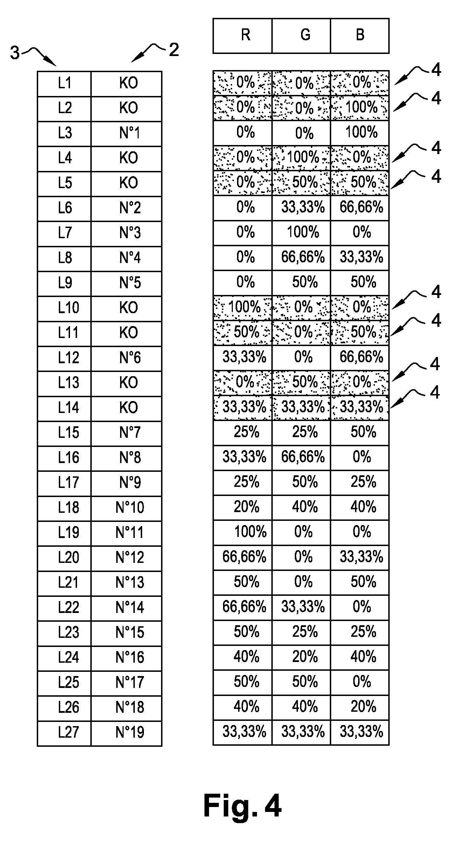

FIG. 4 shows an embodiment of the coding table 20 using a ratio of values representing the proportions of basis colors for each combination of color parameters, on a scale of 100%.

In the light of the previous possible combinations illustrated in FIG. 3, all proportions of basis color are represented through the coding table of FIG. 4, for instance:
- L3 comprises 100% of blue color which represents a pure blue hue, that is to say a combination of levels of {0; 0; 255}, or {0; 0; 127};
- L6 comprises 0% of red color, 33.33% of green color and 66.66% of blue color ;
- L18 comprises 20% of red color, 40% of green color and 40% of blue color ;
- L20 comprises 66.66% of red color, 0% of green color and 33.33% of blue color.

The coding table of FIG. 2 allows indicating that some lines are equal from the quantification of proportions point of view. For instance:
- the proportions of basis colors of the line L2 {0%; 0%; 100%} are equals to the proportions of L3 ;
- the proportions of basis colors of the line L4 {0%; 100%; 0%} are equals to the proportions of L7 ;
- the proportions of basis colors of the line L5 {0%; 50%; 50%} are equals to the proportions of L9 ;
- the proportions of basis colors of the line L10 {100%; 0%; 0%} are equals to the proportions of L19 ;
- the proportions of basis colors of the line L11 {50%; 0%; 50%} are equals to the proportions of L21 ;
- the proportions of basis colors of the line L13 {50%; 50%; 0%} are equals to the proportions of L25 ;
- the proportions of basis colors of the line L14 {33.33%; 33.33%; 33.33%} are equals to the proportions of L27.

The coding table of FIG. 4 shows that for ensuring an encoding/decoding scheme resistant to the brightness, the similar lines should be removed for implementing relative discrimination with a set of predefined combinations.

Moreover, line L1 is removed because it corresponds to the case where black color is generated. This line should be removed because it may be confused with the case where no information is sent between a luminous signal generator and a light sensor.

However, black color could be used in order to calibrate the color sensors. This calibration could be done when presence of black is certain. In this case, the ratio of value for all basis colors could be compensated by a negative offset so that the value for each basis colors gives 0.

As illustrative embodiment, FIG. 5 shows the corresponding constellation of symbols in hue-saturation plane, each represented by a numbered dot. The numbering of the dots corresponds to the numbering of column 3. The circle shows the maximum saturation level and the axes R, G and B correspond to the projection of the component in the Hue-Sat plane. As it can be seen on this FIG. 4, such a modulation corresponds to equidistant symbols in a plane independent of brightness. The brightness is in fact an axis perpendicular to this plane.

In the preferred embodiment, the modulation on the three RGB parameters can be in fact summarized to a modulation on only two parameters: hue and saturation. The present invention is also suitable for a modulation with only one modulation parameter. As an example, by selection of symbols n °1, 2, 3, 4, 5, 6, 8, 11, 12, 13, 14 and 17, the modulation becomes a modulation only on hue, shared in 12 symbols each corresponding to an angular range of 30°.

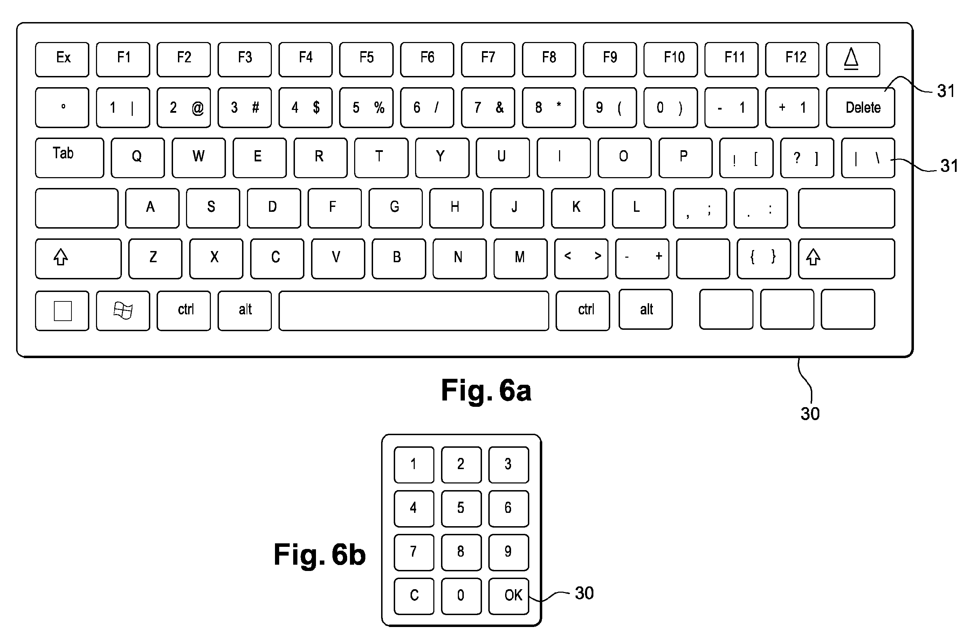

FIG. 6a and FIG. 6b shows embodiments of a keyboard pattern 30. In an embodiment, the keyboard pattern 30 is displayed on a screen of a terminal (not shown). In this case, the terminal comprises means to create a coding/decoding scheme as described herein. The terminal encodes each digital data corresponding to each virtual key 31 of the keyboard pattern 30 by colour modulation of a luminous signal, thanks to the coding/decoding scheme.

Specific examples of the terminal can include cellular or wireless phones, tablets, smartphones, personal digital assistances (PDAs), pagers, portable computers, television, and the like. Although the terminal is referred to in the present application, embodiments of the present invention could be implemented with a number of different terminals capable of encoding data according to the coding/decoding scheme and of displaying the keyboard pattern associated.

In another embodiment, the keyboard pattern 30 is a sticker with the keyboard pattern 30. In this case, the device 10 could provide lighting if not enough luminosity during the capturing phase of the luminous signal.

To communicate with the device, the user approaches the device to the selected virtual key 31. The photosensitive sensor CAPT captures the luminous signal from the selected virtual key 31. In an embodiment, a validation feedback could be provided to user after each key stroke like a sound, or a light emitted by the device 10. Then, the captured signal is converted by the ADC of the device 10.

As illustrated in FIG. 1, the encoded sequence S1 {320; 2080; 3824} is the result from the output of the analog to digital converter ADC. The normalization function of the device 10 allows calculating the proportions of each basis color defining the hue and/or saturation of the luminous signal encoded in the sequence S1.

The sum of the numerical values represents 100% of the ratio of the hue of the luminous signal received.

In the example of FIG. 1, Sum = 320 + 2080 + 3824 = 6224.

We have:
320/6224 = 5% of red color;
2080/6224 = 33.5% of green color;
3824/6224 = 61.5% of blue color.

The normalization function NORM of the device 10 is able to:
- constitute a digital sequence with each digital color values from a same light information;
- weight each digital color values according to the RGB model and the calculation of the sum of each digital color values;
- define proportions of basis color levels in the received luminous signal forming the first sequence S1.

The fact to sum the numerical value allows minimizing alteration or disturbance on the luminous signal captured.

The alteration or disturbance can be made, for instance, by the brightness of the screen (varying from one device to another), the ambient light, are potential causes for introducing disturbances or alterations of the color of the emitted light information.

An advantage of this sum function is to discriminate a hue and/or saturation even if the capture is done in poor condition. For instance, if parasitic light alters the transmission, the hue and/or saturation integrity such as the sequence received is {1; 13; 1}, the sequence S2: {0; 100%, 0} can be retrieved by summing the different numerical value of the triplet, by applying the normalization function and the quantification function.

A second sequence S2 is generated by the device 10 as shown in FIG. 1. The sequence S2 {5%; 33.5%; 61.5%} is an input of the quantification function QUAN of the device 10.

This quantification function QUAN allows comparing the second sequence with a set of predefined sequences of the stored coding/decoding scheme. A distance based on a likelihood criterion may be calculated.

This quantification function QUAN outputs a third sequence S3 based on the results of the previous comparison. In the embodiment illustrated at FIG. 1, the sequence S3 corresponds to the sequence: {0%; 33%; 66%}.

From the sequence S3, the device 10 extracts from its memory MEM the virtual key 31 associated. In addition, the device 10 generates the appropriate event for the action of the user corresponding the virtual key.

In other embodiments, other types of digital symbols S4 may be defined.

As used herein, the term "device" encompasses any processor-equipped devices that exists or may be developed in the future and which are configured to communicate via luminous signals. For example, the term device can encompass mobile devices, any device comprising a processor and a camera. It can be imagined that the device 10 is designed as a kind of stylus comprising a processor and a camera.

The device is designed so that it is not detected by the terminal when performing the operation of entering data. Indeed, in case of the keyboard pattern 30 displayed on the screen of the terminal with touch screen capacity, the device 10 is not detected by the terminal: touch Screen terminal is not aware of the data entered by the user.

The present invention is then suitable for an authentication of the user by the device 10 without a keyboard. The user enters the PIN code by pointing the device on each key of the keyboard pattern. The user selects a symbol but doesn't care of colour. The device 10 gets the colour in order to associate it with the key selected by the user as described herein.

With the present invention, by separating the device performing the authentication step from the keyboard device, users can enter data and authentication performed without providing the user's authentication data to any terminal. In this way, fraud and theft due to misappropriation of authentication data can be minimized.

The invention provides a trusted authentication environment that protects a user's authentication data, whilst providing other parties with reassurance that authentication will be completed.

With the present invention, it may be possible to correct or cancel the authentication data entered by capturing the luminous signal of a dedicated key.

The invention allows entering a PIN code in secure way in a device without keyboard. This color based solution is less expensive and easier to implement than Optical Character Recognition.

The invention may be suitable for an authentication process of an application. For example, After the authentication process succeeds, the device 10 can grant the access to the hosted applications like One Time Password generation, password keychain, ePurse...

## Claims

1. Method for providing a user interface to a device communicating by means of a luminous signal, wherein
- capturing the luminous signal from an input area of a keyboard pattern, said input area comprising a visual key into a unique combination of colours,
- determining at least one colour parameter from said captured luminous signal (11)
- decoding the digital data by demodulation of said at least one colour parameter,
- determining the corresponding key associated to the digital data,
- performing an action associated to said determined key.

2. Method according to the previous claim, wherein a colour parameter used for decoding is hue.

3. Method according to the previous claim, wherein hues are sensibly spaced from each other of 360°/N, where N is the number of coded hues.

4. Method according to any previous claims, wherein a colour parameter used for decoding is saturation.

5. Method according to any previous claims, wherein the determining of at least one colour parameter comprises the following steps:
- measuring a set of colour parameters associated with the captured luminous signal,
- comparing said set of colour parameters with predefined colour parameters,
- determining the closest predefined colour parameters to the set of colour parameters.

6. Method according to any of the previous claims, wherein the predefined colour parameters are stored on a coding table wherein each predefined colour parameter is associated to a key.

7. Method according to any of the previous claims, wherein the keyboard pattern is printed on a sheet, displayed on a screen of a terminal or optically projected on a working surface.

8. Method according to the previous claim, wherein the display of the keyboard on a screen of a terminal comprises the following steps:
- converting each key of the keyboard pattern into a luminous signal by using modulation made on at least one colour parameter,
- generating the luminous signal for each key of the keyboard pattern,
- displaying the generated keyboard pattern.

9. Method according to the claims 7 to 8, wherein the terminal is a cellular or wireless phones, a tablet, a smartphone, a personal digital assistance (PDAs), a pager, a portable computer or a television.

10. Method according to any of the previous claims, wherein a PIN code is entered by pointing or pressing the device on each key of the keyboard pattern corresponding to the PIN.

11. Device (10), comprising:
- a photosensitive sensor (CAPT) for capturing a luminous signal,
- decoding means (COD) for converting said luminous signal into a key of a keyboard pattern,
- wherein the decoding means (COD) uses demodulation made on at least one colour parameter,
- executing an action associated to the decoded key.

12. Device (10) according to the previous claim, wherein the at least one colour parameter is hue and/or saturation.

13. System for providing a keyboard pattern to a device communicating via luminous signal, wherein said device being configured to captures luminous signal from the keyboard and to execute action corresponding to the key of the keyboard pattern associated to said luminous signal according to any previous claims.
